# EUROPÄISCHE PATENTSCHRIFT

(11) **EP 3 102 458 B1**
(45) Veröffentlichungstag und Bekanntmachung des Hinweises auf die Patenterteilung: **06.06.2018**
(21) Anmeldenummer: 15703561.9
(22) Anmeldetag: 05.02.2015
(51) Int. Cl.: B60M 1/30, B60M 1/24

(54) **BEFESTIGUNGSVORRICHTUNG FÜR EINE STROMSCHIENE UND FAHRLEITUNGSSYSTEM**
FIXING DEVICE FOR A CONDUCTOR RAIL AND CONDUCTOR RAIL SYSTEM
DISPOSITIF DE FIXATION PUR UNE BARRE CONDUCTRICE ET LIGNE D'ALIMENTATION UTILISANT UN TEL DISPOSITIF

(30) Priorität: 05.02.2014 DE 102014001456
(43) Veröffentlichungstag der Anmeldung: 14.12.2016
(73) Patentinhaber: Rail Power Systems GmbH, 81373 München (DE)
(72) Erfinder: JOHN, Andreas, 85635 Höhenkirchen-Siegertsbrunn (DE)
(74) Vertreter: Oppermann, Frank
(86) Internationale Anmeldenummer: PCT/EP2015/052428
(87) Internationale Veröffentlichungsnummer: WO 2015/118074

(56) Entgegenhaltungen:
- WO-A1-2006/100267
- US-A- 3 461 250
- US-A- 4 318 462

## Beschreibung

Die Erfindung betrifft eine Befestigungsvorrichtung für eine Stromschiene und ein Fahrleitungssystem mit Befestigungsvorrichtungen, mit denen die Stromschiene befestigt ist.

Zur Stromversorgung elektrisch betriebener Bahnen sind neben Oberleitungen Stromschienen bekannt, die Teil des Fahrleitungssystems sind. Die EP 2 255 991 A2 beschreibt eine Stromschiene mit einem Querträger, von dem zwei Spannarme ausgehen, an die Klemmarme zur Aufnahme eines Fahrdrahtes angeformt sind. Die Spannarme und Klemmarme schließen einen Zwischenraum ein, der Verbindungsstücke zur Verbindung der Stromschienensegmente aufnimmt.

Aus der DE 10 2012 000 117 B3 ist ein Fahrleitungssystem mit Stromschienensegmenten bekannt, die einen in der Einbaulage oberen Träger aufweisen, der mit einer in Längsrichtung verlaufenden Ausnehmung versehen ist, die eine Befestigung der Stromschienensegmente an Auslegern des Fahrleitungssystems mittels in die Ausnehmung greifenden Verbindungselementen erlauben. Die Verbindungselemente sind vorzugsweise Hakenkopfschrauben. Die bekannten Stromschienen erlauben nicht nur die Befestigung an Auslegern des Fahrleitungssystems mit Hakenkopfschrauben, sondern auch mit Befestigungsvorrichtungen, die eine den oberen Träger der Stromschiene umgreifende Halterung aufweisen. Eine bevorzugte Ausführungsform dieser Halterung sieht zur Fixierung des Stromschienenträgers Distanzelemente aus Kunststoff vor.

Die DE 199 13 351 C1 beschreibt eine Befestigungsvorrichtung für eine Stromschiene mit einem in die Befestigungsvorrichtung einzusetzenden Befestigungsstück. Die Befestigungsvorrichtung weist das Befestigungsstück der Stromschiene umgreifende Klauen auf. Das Befestigungsstück wird in den Klauen mit Klemmschrauben fixiert.
Die oben genannten Befestigungsvorrichtungen für Stromschienen zeichnen sich dadurch aus, dass sie aus einem metallischen Körper bestehen. Die Befestigungsvorrichtungen können beispielsweise aus Aluminium gefertigt sein. Sie erlauben eine einfache Montage und Demontage der Stromschienen und haben sich in der Praxis bewährt. Nachteilig sind jedoch die relativ hohen Herstellungskosten.

Aus der US 3 461 250 A ist eine Befestigungsvorrichtung nach dem Oberbegriff des Anspruchs 1 bekannt, die einen das Befestigungsstück der Stromschiene umgreifenden Isolationskörper aufweist, der aus Fiberglas oder aus Kunststoff besteht. Der zweiteilige Isolationskörper ist mittels Schrauben in einer das Befestigungsstück der Stromschiene von beiden Seiten umgreifenden Stellung fixierbar. Die Stromschiene wird von Backen des Isolationskörpers seitlich umgriffen.
Der Erfindung liegt die Aufgabe zu Grunde, eine Befestigungsvorrichtung für eine Stromschiene zu schaffen, die sich in großen Stückzahlen mit verhältnismäßig geringen Kosten herstellen lässt und eine einfache Montage und Demontage der Stromschiene erlaubt. Darüber hinaus ist eine Aufgabe der Erfindung, ein Fahrleitungssystem bereitzustellen, dass mit verhältnismäßig geringen Kosten errichtet werden kann und eine einfache Montage und Demontage der Stromschiene ermöglicht.
Die Lösung dieser Aufgaben erfolgt erfindungsgemäß mit den Merkmalen der unabhängigen Patentansprüche. Die abhängigen Ansprüche betreffen bevorzugte Ausführungsformen der Erfindung.

Die erfindungsgemäße Befestigungsvorrichtung zeichnet sich dadurch aus, dass sie im Gegensatz zu den bekannten Befestigungsvorrichtungen nicht als ein Metallteil, sondern ein Kunststoffteil ausgebildet ist. Dabei wird unter einem Kunststoffteil auch eine Einheit verstanden, die aus mehreren Teilstücken aus Kunststoff besteht. Unter einem Kunststoffteil wird auch ein Teil verstanden, das noch ein oder mehrere Metallteile enthält, beispielsweise metallische Teile zur Verbindung der Teilstücke aus Kunststoff, insbesondere eine Metallschraube. Allein entscheidend ist, dass der wesentliche Bestandteil der Befestigungsvorrichtung mit den aus der Kunststoffverarbeitung bekannten Verfahren, beispielsweise Spritzgießverfahren, hergestellt werden kann.

Es hat sich gezeigt, dass die Herstellung der Befestigungsvorrichtungen aus Kunststoff Vorteile bietet. Zu diesen Vorteilen zählen nicht nur die erheblich geringeren Fertigungskosten, sondern auch die Eigenschaften, die sich aus Kunststoff als elektrischer Isolator ergeben. Darüber hinaus ermöglicht der Kunststoff eine gleitende Justierung der Stromschiene in der Befestigungsvorrichtung. Daher kann auf die Zwischenlage von zusätzlichen Distanz- oder Gleitstücken verzichtet werden, wodurch sich wiederum die Herstellung der Befestigungsvorrichtung und deren Handhabung vereinfacht.

Das Kunststoffteil der erfindungsgemäßen Befestigungsvorrichtung weist die Stromschiene seitlich umgreifende Gleitbacken auf, die in einer das Befestigungsstück der Stromschiene von beiden Seiten umgreifenden Stellung fixierbar sind. Die Gleitbacken können unterschiedlich ausgebildet sein. Allein entscheidend ist, dass die Stromschiene mit den Gleitbacken gleitend fixiert ist, d.h. Längenänderungen der Stromschiene infolge von Temperaturänderungen möglich sind.

Das Kunststoffteil der Befestigungsvorrichtung weist ein in der Einbaulage oberes Teilstück und ein unteres Teilstück auf, wobei das obere Teilstück als Isolator ausgebildet ist und das untere Teilstück die Halterung für das Befestigungsstück der Stromschiene bildet. Das als Isolator ausgebildete Teilstück des Kunststoffteils weist zur Verlängerung des Kriechweges einen oder mehrere Schirme oder Rippen auf. Folglich übernimmt die erfindungsgemäße Befestigungsvorrichtung nicht nur die Funktion einer Stromschienenklemme bekannter Bauart, sondern auch die Funktion eines Isolators. Da auch das untere Teilstück der erfindungsgemäßen Befestigungsvorrichtung die elektrischen Eigenschaften eines Isolators hat, kann die Bauhöhe der gesamten Einheit insgesamt verringert werden.

Die das Verbindungsstück der Stromschiene seitlich umgreifenden Gleitbacken sind derart ausgebildet, dass die Stromschiene in dem Befestigungsstück gleitend geführt ist. Die Gleitbacken weisen jeweils vorzugsweise einen in der Einbaulage oberen und unteren Schenkel auf, die über einen seitlichen Schenkel miteinander verbunden sind.

Bei einer weiteren bevorzugten Ausführungsform der Befestigungsvorrichtung weist das untere Teilstück des Kunststoffteils einen zentralen Basiskörper auf, wobei die eine Gleitbacke mit dem Basiskörper einstückig ist und die andere Gleitbacke auf den Basiskörper aufsetzbar ist. Zur Montage der Stromschiene braucht die Schiene nur in die feste Gleitbacke eingesetzt und dann mit der losen Gleitbacke fixiert werden. Der zentrale Basiskörper ist an der Seite, die der aufsetzbaren Gleitbacke zugewandt ist, und die aufsetzbare Gleitbacke ist an der Seite, die dem Basiskörper zugewandt ist, vorzugsweise derart profiliert, dass Gleitbacke und Basiskörper ineinandergreifen. Dadurch wird auch eine formschlüssige Verbindung von Gleitbacke und Basiskörper geschaffen, die ein leichtes Öffnen und Schließen der Halterung und eine sichere Fixierung erlaubt.

Die aufsetzbare Gleitbacke weist vorzugsweise ein Profilstück des zentralen Basiskörpers über- und untergreifende Profilstücke auf. Es ist aber auch möglich, dass der Basiskörper ein Profilstück der aufsetzbaren Gleitbacke über- und untergreifende Profilstücke aufweist.

Zur Befestigung der aufsetzbaren Gleitbacke an dem zentralen Basiskörper dient vorzugsweise eine Schraube, mit der Gleitbacke und Basiskörper verschraubt sind.

Eine weitere bevorzugte Ausführungsform der erfindungsgemäßen Befestigungsvorrichtung sieht vor, dass das als Isolator ausgebildete obere Teilstück des Kunststoffteils aus mehreren Isolator-Teilen besteht. Dadurch ist es möglich, die Befestigungsvorrichtung universell einzusetzen.

Die Befestigungsvorrichtung erlaubt eine einfache Verlängerung des Isolators in Abhängigkeit von dem Einsatz der Befestigungsvorrichtung, beispielsweise im Nah- oder Fernverkehr, da der Isolator aus mehreren Isolator-Teilen zusammengesetzt werden kann, die vorzugsweise miteinander verschraubt werden können. Hierzu weist jeder Isolator-Teil einen Kern mit einem in Einbaulage unteren und oberen Abschnitt auf, wobei der obere Abschnitt ein Außengewinde aufweist und der untere Abschnitt eine Ausnehmung mit einem Innengewinde aufweist, so dass der untere Abschnitt des einen Isolator-Teils auf den oberen Abschnitt des anderen Isolator-Teils aufgeschraubt werden kann. Es ist aber auch möglich, dass der in der Einbaulage obere Abschnitt des Isolator-Teils einen größeren Außendurchmesser als der untere Abschnitt hat und mit einer Ausnehmung versehen ist, die ein Innengewinde hat, während der untere Abschnitt einen kleineren Außendurchmesser als der obere Abschnitt hat und mit einem Außengewinde versehen ist.

Wenn an die elektrischen Eigenschaften des Isolators, beispielsweise für den Einsatz der Befestigungsvorrichtung im Nahverkehr, nur geringere Anforderungen zu stellen sind, ist es ausreichend, wenn der Isolator nur eine verhältnismäßig geringe Länge hat und nur über einen einzigen Schirm verfügt.

Das Außen- bzw. Innengewinde des in der Einbaulage oberen Abschnitts kann vorteilhafterweise gleichsam als Befestigungsmittel zur Montage der Befestigungsvorrichtung an einem Stützpunkt dienen. Daher ist es nicht erforderlich, dass an der Befestigungsvorrichtung weitere Befestigungsmittel vorgesehen sind, wodurch sich ein besonders einfacher Aufbau ergibt.

Im Folgenden wird ein Ausführungsbeispiel der Erfindung unter Bezugnahme auf die Figuren im Einzelnen beschrieben.

Es zeigen:
Fig. 1 ein Ausführungsbeispiel der erfindungsgemäßen Befestigungsvorrichtung in perspektivischer Darstellung, wobei die Gleitbacken miteinander verschraubt sind,
Fig. 2 die Befestigungsvorrichtung von Fig. 1 mit abgenommener Gleitbacke,
Fig. 3 ein Isolator-Teil zur Verlängerung des Isolators der Befestigungsvorrichtung von Fig. 1 und
Fig. 4 ein weiteres Ausführungsbeispiel der Befestigungsvorrichtung zusammen mit einer Stromschiene in perspektivischer Darstellung.

Nachfolgend wird die erfindungsgemäße Befestigungsvorrichtung 1 in der Einbaulage beschrieben, in der die Befestigungsvorrichtung hängend an einem nicht dargestellten Stützpunkt befestigt ist. Die Befestigungsvorrichtung 1 kann beispielsweise an einem Ausleger befestigt sein, der wiederum an der Decke eines Tunnels befestigt ist. Derartige Befestigungssysteme eines Deckenstromschienen-Fahrleitungssystems sind bekannt.

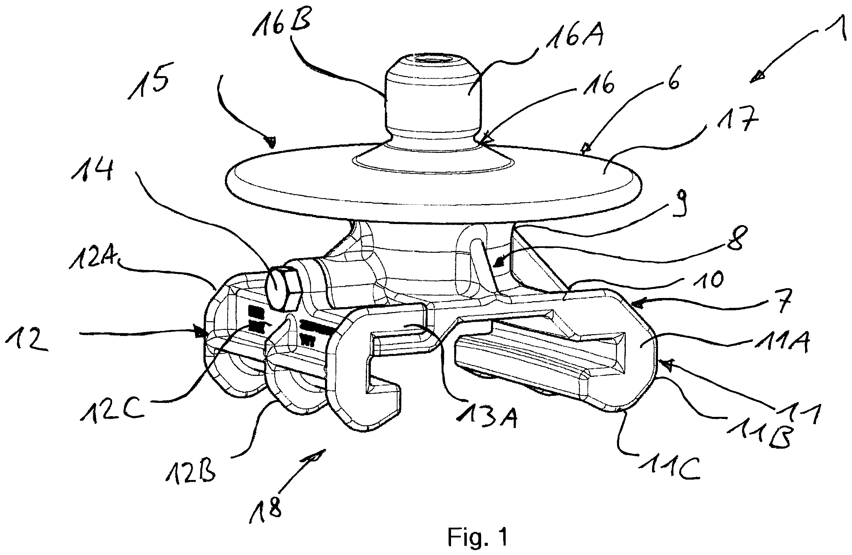

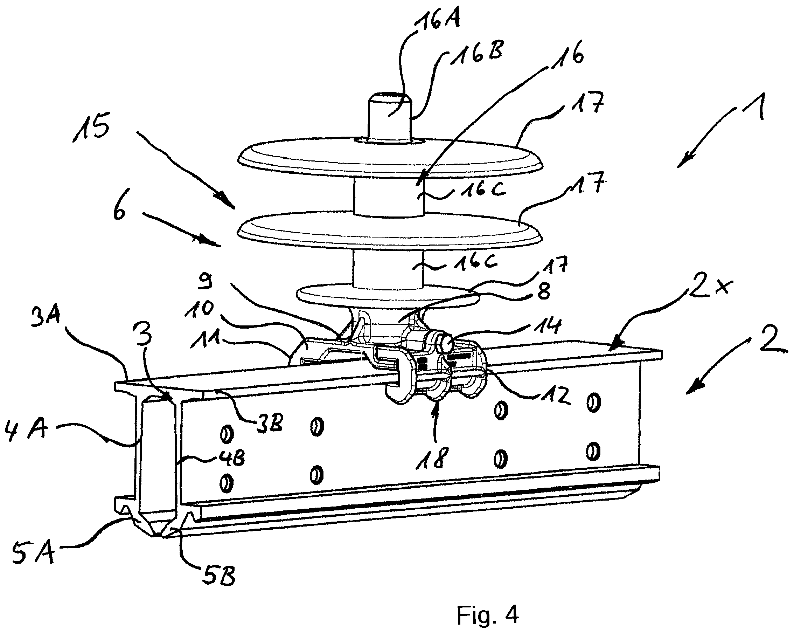

Fig. 1 zeigt ein Ausführungsbeispiel der erfindungsgemäßen Befestigungsvorrichtung 1, die sich von dem Ausführungsbeispiel der in Fig. 4 gezeigten Befestigungsvorrichtung 1 nur durch die Länge des Isolators unterscheidet. Einander entsprechende Teile sind daher mit den gleichen Bezugszeichen versehen. Fig. 4 zeigt die Befestigungsvorrichtung 1 zusammen mit der Stromschiene 2.

Die Stromschiene 2 (Fig. 4) besteht aus mehreren Teilstücken 2X, die mit nicht dargestellten Verbindungselementen an den Stirnseiten miteinander verbunden werden. Die Stromschiene 2 weist ein in Einbaulage oberes Befestigungsstück 3 mit seitlich vorspringenden Ansätzen 3A, 3B auf, das in einer Halterung 18 der Befestigungsvorrichtung 1 gleitend fixiert wird. An das Befestigungsstück 3 schließen sich zu beiden Seiten nach unten erstreckende Schenkel 4A, 4B an, die an den unteren Enden in sich nach innen erstreckende Klemmarme 5A, 5B übergehen, mit denen der nicht dargestellte Fahrdraht des Fahrleitungssystems klemmend gehalten wird.

Die Befestigungsvorrichtung 1 ist ein Kunststoffteil, das bei dem vorliegenden Ausführungsbeispiel aus glasfaserverstärktem Kunststoff (GFK) besteht. Das Kunststoffteil weist ein in der Einbaulage oberes Teilstück 6 und ein unteres Teilstück 7 auf, die einstückig miteinander verbunden sind. Das obere Teilstück 6 ist als ein Isolator 15 ausgebildet, während das untere Teilstück 7 die Halterung 18 zur gleitenden Fixierung der Stromschiene 2 bildet.

Das untere Teilstück 7 des Kunststoffteils weist einen zentralen Basiskörper 8 mit einem oberen runden Abschnitt 9 auf, der in einen unteren plattenförmigen Abschnitt 10 übergeht, an den seitlich eine Gleitbacke 11 angeformt ist. Die Gleitbacke 11 weist einen oberen Schenkel 11A und einen unteren Schenkel 11B auf, die über einen seitlichen Schenkel 11C miteinander verbunden sind. Der Abstand des oberen und unteren Schenkels 11A, 11B ist derart bemessen, dass der seitliche Ansatz 3A, 3B des Befestigungsstücks 3 der Stromschiene 2 passend in die Gleitbacke 11 eingesetzt werden kann. Dabei ist die metallische Stromschiene gleitend in der Gleitbacke aus Kunststoff geführt.

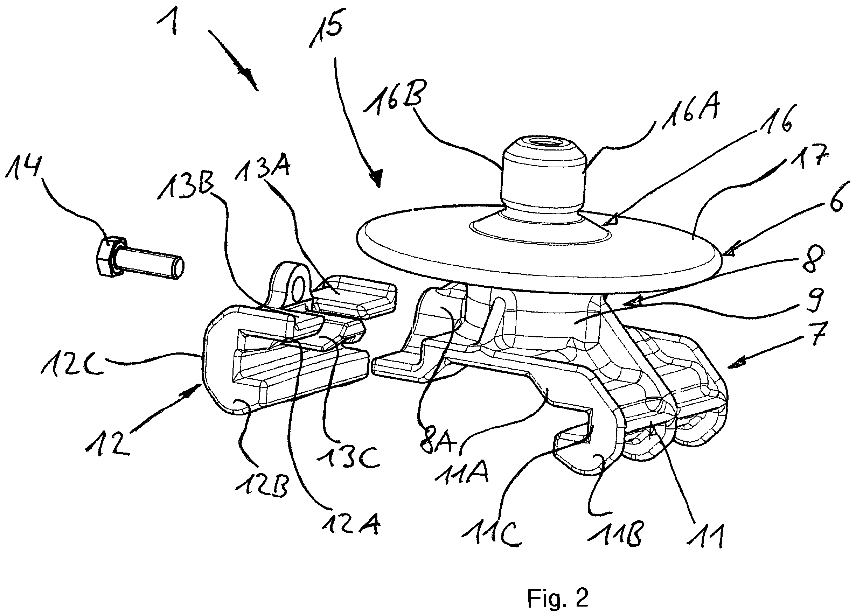

Während die eine Gleitbacke 11 mit dem Basiskörper 8 einstückig ist, kann die andere Gleitbacke 12 zur gleitenden Fixierung der Stromschiene 2 auf den Basiskörper 8 aufgesetzt und an dem Basiskörper befestigt werden. Fig. 2 zeigt die Befestigungsvorrichtung 1 mit abgenommener Gleitbacke 12. Die aufsetzbare Gleitbacke 12 weist wie die mit dem Basiskörper 8 einstückige Gleitbacke 11 einen oberen, mittleren und unteren Schenkel 12A, 12B, 12C auf, die den seitlichen Ansatz 3A, 3B der Stromschiene umgreifen.

Der obere Schenkel 12A der aufsetzbaren Gleitbacke 12 weist zwei seitliche obere Profilstücke 13A, 13B und ein mittleres unteres Profilstück 13C auf, das im Abstand zu den oberen Profilstücken 13A, 13B angeordnet ist (Fig. 2). Beim Aufsetzen der Gleitbacke 12 auf den Basiskörper 8 übergreifen die oberen Profilstücke 13A, 13B der Gleitbacke 12 seitlich ein Profilstück 8A des Basiskörpers 8, während das untere Profilstück 13C der Gleitbacke 12 das Profilstück 8A des Basiskörpers 8 in der Mitte untergreift. Dadurch ist sichergestellt, dass die Gleitbacke 12 fest auf dem Basiskörper 8 sitzt. Die erforderliche Klemmkraft wird mit einer Schraube 14 ausgeübt, mit der Gleitbacke 12 und Basiskörper 8 fest gegeneinander verschraubt werden. Dabei ist zwischen den Gleitbacken 11, 12 und den Stirnflächen der seitlichen Ansätze 3A, 3B des Befestigungsstücks 3 der Stromschiene 2 noch ein gewisses Spiel, so dass die Stromschiene nicht klemmend, sondern gleitend gelagert ist.

Die in Fig. 1 gezeigte Befestigungsvorrichtung ist insbesondere für den Nahverkehr bestimmt. Das obere Teilstück 6 des Kunststoffteils, das den Isolator 15 bildet, weist einen Isolator-Kern 16 und einen Isolator-Schirm 17 auf. Der Isolator-Kern 16 des einteiligen Isolators weist einen oberen Abschnitt 16A auf, der mit einem Außengewinde 16B versehen ist. Der obere Abschnitt 16A mit dem Außengewinde 16B dient als Befestigungsmittel zur Montage der Befestigungsvorrichtung 1 an einem nicht dargestellten Stützpunkt. Beispielsweise kann der obere Abschnitt 16A mit einem nicht dargestellten Befestigungsteil verschraubt werden, das eine Ausnehmung mit einem Innengewinde aufweist.

Für den Fernverkehr werden höhere Anforderungen an die elektrischen Eigenschaften des Isolators gestellt. Zur Verbesserung der elektrischen Eigenschaften des Isolators kann die Länge des Isolators verlängert werden.

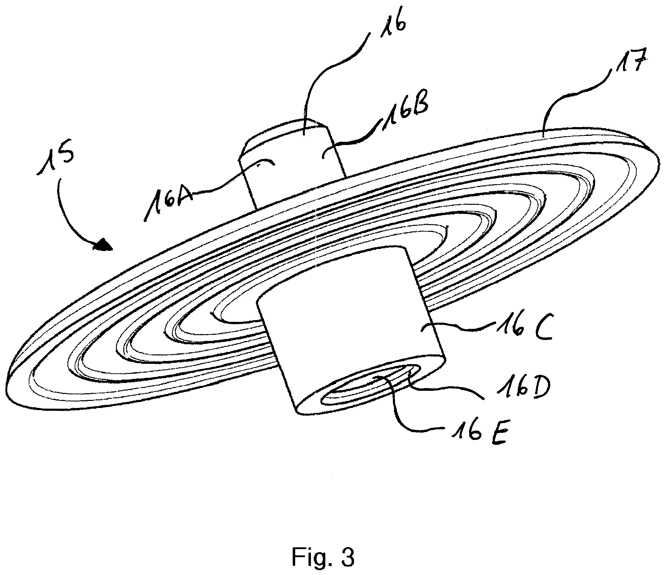

Fig. 3 zeigt ein Isolator-Teil 15 zur Verlängerung des Isolators der Befestigungsvorrichtung von Fig. 1. Der Isolator-Teil 15 weist einen Isolator-Kern 16 mit einem oberen Abschnitt 16A und einem unteren Abschnitt 16C und einen Schirm 17 auf. Der untere Abschnitt 16C des Isolator-Kerns 16 weist eine Ausnehmung 16D mit einem Innengewinde 16E auf, während der obere Abschnitt 16A ein Außengewinde 16B aufweist. Der Außendurchmesser des oberen Abschnitts 16A entspricht dem Innendurchmesser der Ausnehmung 16D des unteren Abschnitts, wobei der Außendurchmesser des oberen Abschnitts des Isolator-Kerns des Isolator-Teils von Fig. 3 dem Außendurchmesser des oberen Abschnitts des Isolator-Kerns des Isolators der Befestigungsvorrichtung von Fig. 1 entspricht. Zur Verlängerung des Isolators wird der untere Abschnitt des einen Isolator-Teils auf den oberen Abschnitt des anderen Isolator-Teils geschraubt, wobei mehrere Isolator-Teile miteinander verschraubt werden können.

Fig. 4 zeigt ein Ausführungsbeispiel, bei dem auf den zweiten Isolator-Teil 15 ein dritter Isolator-Teil 15 aufgeschraubt ist. Bei diesem Ausführungsbeispiel bildet der obere Abschnitt des dritten Isolator-Teils das Befestigungsmittel zur Montage der Befestigungsvorrichtung an dem nicht dargestellten Stützpunkt. Die Schirme 17 der einzelnen Isolator-Teile 15 können unterschiedliche Durchmesser haben.

## Patentansprüche

1. Befestigungsvorrichtung für eine Stromschiene, die ein Befestigungsstück aufweist, wobei die Befestigungsvorrichtung eine das Befestigungsstück der Stromschiene umgreifende Halterung (18) aufweist und die Befestigungsvorrichtung als ein Kunststoffteil ausgebildet ist, wobei das Kunststoffteil das Befestigungsstück der Stromschiene seitlich umgreifende Gleitbacken (11, 12) aufweist, die in einer das Befestigungsstück von beiden Seiten umgreifenden Stellung fixierbar sind, **dadurch gekennzeichnet, dass** das Kunststoffteil ein in der Einbaulage oberes Teilstück (6) und ein unteres Teilstück (7) aufweist, wobei das obere Teilstück (6) als Isolator (15) ausgebildet ist, der einen oder mehrere Schirme (17) oder Rippen aufweist, und das untere Teilstück (7) die Gleitbacken (11, 12) aufweist.

2. Befestigungsvorrichtung nach Anspruch 1, **dadurch gekennzeichnet, dass** das Kunststoffteil ein Kunststoffteil aus glasfaserverstärktem Kunststoff (GFK) ist

3. Befestigungsvorrichtung nach Anspruch 1 oder 2, **dadurch gekennzeichnet, dass** die Gleitbacken (11, 12) jeweils einen in der Einbaulage oberen und unteren Schenkel (11A, 11B; 12A, 12B) aufweisen, die über einen seitlichen Schenkel (12C; 12C) miteinander verbunden sind.

4. Befestigungsvorrichtung nach einem der Ansprüche 1 bis 3, **dadurch gekennzeichnet, dass** das untere Teilstück (7) des Kunststoffteils einen zentralen Basiskörper (8) aufweist, wobei die eine Gleitbacke (11) mit dem Basiskörper (8) einstückig ist und die andere Gleitbacke (12) auf den Basiskörpers (8) aufsetzbar ist.

5. Befestigungsvorrichtung nach Anspruch 4, **dadurch gekennzeichnet, dass** der Basiskörper (8) an der Seite, die der aufsetzbaren Gleitbacke (12) zugewandt ist, und die aufsetzbare Gleitbacke (12) an der Seite, die dem Basiskörper (8) zugewandt ist, derart profiliert sind, dass Gleitbacke (12) und Basiskörper (8) ineinandergreifen.

6. Befestigungsvorrichtung nach Anspruch 5, **dadurch gekennzeichnet, dass** die aufsetzbare Gleitbacke (12) ein Profilstück (8A) des Basiskörpers (8) über- und untergreifende Profilstücke (12A, 12B, 12C) aufweist.

7. Befestigungsvorrichtung nach Anspruch 5 oder 6, **dadurch gekennzeichnet, dass** die aufsetzbate Gleitbacke (12) und der Basiskörper (8) zur gleitenden Fixierung des Befestigungsstücks der Stromschiene miteinander verschraubbar sind.

8. Befestigungsvorrichtung nach einem der Ansprüche 1 bis 7, **dadurch gekennzeichnet, dass** das als Isolator (15) ausgebildete obere Teilstück (6) des Kunststoffteils einen Isolator-Kern (16) mit einem in der Einbaulage oberen Abschnitt (16A) aufweist, der mit einem Außengewinde (16B) versehen ist.

9. Befestigungsvorrichtung nach einem der Ansprüche 1 bis 7, **dadurch gekennzeichnet, dass** das als Isolator ausgebildete obere Teilstück (16A) des Kunststoffteils aus mindestens zwei Isolator-Teilen (15) besteht, wobei eines der mindestens zwei Isolator-Teile mit dem unteren Teilstück (7) des Kunststoffteils einstückig ist.

10. Befestigungsvorrichtung nach Anspruch 9, **dadurch gekennzeichnet, dass** der mit dem unteren Teilstück (7) des Kunststoffteils einstückige Isolator-Teil (15) einen Isolator-Kern (16) mit einem in der Einbaulage oberen Abschnitt (16A) aufweist, der mit einem Außengewinde (16B) versehen ist.

11. Befestigungsvorrichtung nach Anspruch 9 oder 10, **dadurch gekennzeichnet, dass** der mit dem unteren Teilstück (7) des Kunststoffteils nicht einstückige Isolator-Teil (15) einen Isolator-Kern (16) mit einem in der Einbaulage unteren Abschnitt (16C) aufweist, der mit einer Ausnehmung (16D) versehen ist, die ein Innengewinde (16E) hat, so dass der mit dem unteren Teilstück (7) des Kunststoffteils nicht einstückige Isolator-Teil und der mit dem unteren Abschnitt des Isolator-Teils einstückige Isolator-Teil miteinander verschraubbar sind.

12. Befestigungsvorrichtung nach Anspruch 11, **dadurch gekennzeichnet, dass** der Isolator-Kern (16) des mit dem unteren Teilstück (7) des Kunststoffteils nicht einstückigen Isolator-Teils (15) einen oberen Abschnitt (16A) mit einem Außengewinde (16B) aufweist, dessen Außendurchmesser dem Innendurchmesser der Ausnehmung (16D) des unteren Abschnitts (16C) des Isolator-Kerns (16) entspricht.

13. Fahrleitungssystem mit Befestigungsvorrichtungen (1) nach einem der Ansprüche 1 bis 12, an denen Stromschienen (2) befestigt sind.

## Claims

1. Fastening device for a conductor rail which has a fastening piece, the fastening device having a holder (18) which encloses the fastening piece of the conductor rail, and the fastening device (1) being in the form of a plastics component, the plastics component having sliding jaws (11, 12) which enclose the fastening piece of the conductor rail laterally and can be fixed in a position in which they enclose the fastening piece from both sides,
**characterised in that**
the plastics component has, in the installed position, an upper part (6) and a lower part (7), the upper part (6) being in the form of an insulator (15) which has one or more shields (17) or ribs, and the lower part (7) having the sliding jaws (11, 12).

2. Fastening device according to claim 1, **characterised in that** the plastics component is a plastics component made of glass fibre reinforced plastics material (GFRP).

3. Fastening device according to either claim 1 or claim 2, **characterised in that** the sliding jaws (11, 12) each have, in the installed position, an upper and lower leg (11A, 11B; 12A, 12B) which are interconnected via a lateral leg (12C; 12C).

4. Fastening device according to any of claims 1 to 3, **characterised in that** the lower part (7) of the plastics component has a central base body (8), one sliding jaw (11) being integral with the base body (8) and the other sliding jaw (12) being able to be attached to the base body (8).

5. Fastening device according to claim 4, **characterised in that** the base body (8) is so profiled on the side facing the attachable sliding jaw (12), and the attachable sliding jaw (12) is so profiled on the side facing the base body (8), that the sliding jaw (12) and the base body (8) interlock.

6. Fastening device according to claim 5, **characterised in that** the attachable sliding jaw (12) has profile pieces (12A, 12B, 12C) which engage a profile piece (8A) of the base body (8) from above and beneath.

7. Fastening device according to either claim 5 or claim 6, **characterised in that** the attachable sliding jaw (12) and the base body (8) can be screwed together to fix the fastening piece of the conductor rail in a sliding manner.

8. Fastening device according to any of claims 1 to 7, **characterised in that** the upper part (6) of the plastics component in the form of the insulator (15) has an insulator core (16) having, in the installed position, an upper portion (16A) which is provided with an external thread (16B).

9. Fastening device according to any of claims 1 to 7, **characterised in that** the upper part (16A) of the plastics component in the form of an insulator consists of at least two insulator components (15), one of the at least two insulator components being integral with the lower part (7) of the plastics component.

10. Fastening device according to claim 9, **characterised in that** the insulator component (15) that is integral with the lower part (7) of the plastics component has an insulator core (16) having, in the installed position, an upper portion (16A) which is provided with an external thread (16B).

11. Fastening device according to claim 9 or 10, **characterised in that** the insulator component (15) that is not integral with the lower part (7) of the plastics component has an insulator core (16) having, in the installed position, a lower portion (16C) which is provided with a recess (16D) which has an internal thread (16E), such that it is possible to screw together the insulator component that is not integral with the lower part (7) of the plastics component and the insulator component that is integral with the lower portion of the insulator component.

12. Fastening device according to claim 11, **characterised in that** the insulator core (16) of the insulator component (15) that is not integral with the lower part (7) of the plastics component has an upper portion (16A) having an external thread (16B), the external diameter of which corresponds to the internal diameter of the recess (16D) in the lower portion (16C) of the insulator core (16).

13. Contact line system having fastening devices (1) according to any of claims 1 to 12, to which conductor rails (2) are fastened.

## Revendications

1. Dispositif de fixation pour un rail conducteur, qui présente une pièce de fixation, dans lequel le dispositif de fixation présente un support (18) entourant la pièce de fixation du rail conducteur et le dispositif de fixation est réalisé en tant que partie en matière plastique, dans lequel la partie en matière plastique présente des patins (11, 12) entourant latéralement la pièce de fixation du rail conducteur qui peuvent être fixés dans une position entourant la pièce de fixation des deux côtés, **caractérisé en ce que** la partie en matière plastique présente une pièce partielle (6) supérieure dans la position d'installation et une pièce partielle (7) inférieure, dans lequel la pièce partielle (6) supérieure est réalisée en tant qu'isolant (15) qui présente un ou plusieurs écrans (17) ou nervures, et la pièce partielle (7) inférieure présente les patins (11, 12).

2. Dispositif de fixation selon la revendication 1, **caractérisé en ce que** la partie en matière plastique est une partie en matière plastique en matière plastique renforcée par des fibres de verre (GFK).

3. Dispositif de fixation selon la revendication 1 ou 2, **caractérisé en ce que** les patins (11, 12) présentent respectivement une branche (11A, 11B ; 12A, 12B) supérieure et inférieure dans la position d'installation qui sont raccordées entre elles par le biais d'une branche latérale (12C ; 12C).

4. Dispositif de fixation selon l'une quelconque des revendications 1 à 3, **caractérisé en ce que** la pièce partielle (7) inférieure de la partie en matière plastique présente un corps de base (8) central, dans lequel l'un patin (11) est d'un seul tenant avec le corps de base (8) et l'autre patin (12) peut être placé sur le corps de base (8).

5. Dispositif de fixation selon la revendication 4, **caractérisé en ce que** le corps de base (8) sur le côté qui est tourné vers le patin (12) démontable, et le patin (12) démontable sur le côté qui est tourné vers le corps de base (8) sont profilés de telle manière que des patins (12) et le corps de base (8) viennent en prise les uns dans les autres.

6. Dispositif de fixation selon la revendication 5, **caractérisé en ce que** le patin (12) démontable présente des pièces profilées (12A, 12B, 12C) recouvrant ou venant en prise sous une pièce profilée (8A) du corps de base (8).

7. Dispositif de fixation selon la revendication 5 ou 6, **caractérisé en ce que** le patin (12) démontable et le corps de base (8) peuvent être vissés l'un à l'autre pour la fixation coulissante de la pièce de fixation du rail conducteur.

8. Dispositif de fixation selon l'une quelconque des revendications 1 à 7, **caractérisé en ce que** la pièce partielle (6) supérieure réalisée en tant qu'isolant (15) de la partie en matière plastique présente un coeur d'isolant (16) avec une section (16A) supérieure dans la position d'installation qui est pourvue d'un filet extérieur (16B).

9. Dispositif de fixation selon l'une quelconque des revendications 1 à 7, **caractérisé en ce que** la pièce partielle (16A) supérieure réalisée en tant qu'isolant de la partie en matière plastique se compose d'au moins deux parties d'isolant (15), dans lequel une des au moins deux parties d'isolant est d'un seul tenant avec la pièce partielle (7) inférieure de la partie en matière plastique.

10. Dispositif de fixation selon la revendication 9, **caractérisé en ce que** la partie d'isolant (15) d'un seul tenant avec la pièce partielle (7) inférieure de la partie en matière plastique présente un coeur d'isolant (16) avec une section supérieure (16A) dans la position d'installation qui est pourvue d'un filet extérieur (16B).

11. Dispositif de fixation selon la revendication 9 ou 10, **caractérisé en ce que** la partie d'isolant (15) qui n'est pas d'un seul tenant avec la pièce partielle inférieure (7) de la partie en matière plastique présente un coeur d'isolant (16) avec une section inférieure (16C) en position d'installation qui est pourvue d'un évidement (16D) qui présente un filet intérieur (16E) de sorte que la partie d'isolant qui n'est pas d'un seul tenant avec la pièce partielle inférieure (7) de la partie en matière plastique et la partie d'isolant qui est d'un seul tenant avec la section inférieure de la partie d'isolant puissent être vissées l'une avec l'autre.

12. Dispositif de fixation selon la revendication 11, **caractérisé en ce que** le coeur d'isolant (16) de la partie d'isolant (15) qui n'est pas d'un seul tenant avec la pièce partielle (7) inférieure de la partie en matière plastique présente une section supérieure (16A) avec un filet extérieur (16B), dont le diamètre extérieur correspond au diamètre intérieur de l'évidement (16D) de la section inférieure (16C) du coeur d'isolant (16).

13. Système de ligne de contact avec des dispositifs de fixation (1) selon l'une quelconque des revendications 1 à 12, sur lesquels des rails conducteurs (2) sont fixés.
